# EUROPEAN PATENT SPECIFICATION

(11) **EP 0 696 823 B1**
(45) Date of publication and mention of the grant of the patent: **28.10.1998**
(21) Application number: 95909963.1
(22) Date of filing: 23.02.1995
(51) Int. Cl.: H01M 4/38

(54) **HYDROGEN ABSORBING ELECTRODE AND PRODUCTION METHOD THEREOF**
WASSERSTOFFABSORBIERENDE ELEKTRODE UND DEREN HERSTELLUNG
ELECTRODE ABSORBANT L'HYDROGENE ET SON PROCEDE DE PRODUCTION

(30) Priority: 25.02.1994 JP 27189/94; 30.06.1994 JP 149142/94; 31.10.1994 JP 266564/94; 09.11.1994 JP 274822/94; 11.11.1994 JP 276899/94
(43) Date of publication of application: 14.02.1996
(73) Proprietor: YUASA CORPORATION, Takatsuki-shi, Osaka 569 (JP)
(72) Inventor: MATSUMURA, Yuichi, Takatsuki-shi Osaka 569 (JP); BOGAUCHI, Takehito, Takatsuki-shi Osaka 569 (JP); OHNISHI, Masuhiro, Takatsuki-shi Osaka 569 (JP); FURUKAWA, Kengo, Takatsuki-shi Osaka 569 (JP); NAKAGAWA, Hiroe, Osaka 569 (JP); TANAKA, Toshiki, Osaka 569 (JP); KUZUHARA, Minoru, Osaka 569 (JP); OSHITANI, Masahiko, Takatsuki-shi Osaka 569 (JP)
(74) Representative: Paget, Hugh Charles Edward
(86) International application number: PCT/JP95/00262
(87) International publication number: WO 95/23435

(56) References cited:
- EP-A- 0 271 043
- EP-A- 0 645 833
- JP-A- 4 319 258
- US-A- 4 859 413
- PATENT ABSTRACTS OF JAPAN vol. 017 no. 668 (E-1473) ,9 December 1993 & JP-A-05 225975 (FURUKAWA BATTERY CO LTD:THE) 3 September 1993,
- CHEMICAL ABSTRACTS, vol. 117, no. 20, 16 November 1992 Columbus, Ohio, US; abstract no. 195189, KAMEOKA SEIJI ET AL 'Manufacture of hydrogen-absorbing alloy anodes'
- CHEMICAL ABSTRACTS, vol. 115, no. 14, 7 October 1991 Columbus, Ohio, US; abstract no. 139623, KANEKAWA IKUO ET AL 'Manufacture of hydrogen-absorbing alloy anode '
- PATENT ABSTRACTS OF JAPAN vol. 018 no. 586 (E-1627) ,9 November 1994 & JP-A-06 223827 (SUMITOMO METAL IND LTD) 12 August 1994,
- PATENT ABSTRACTS OF JAPAN vol. 017 no. 668 (E-1473) ,9 December 1993 & JP-A-05 225974 (FURUKAWA BATTERY CO LTD:THE) 3 September 1993,
- PATENT ABSTRACTS OF JAPAN vol. 013 no. 381 (E-810) ,23 August 1989 & JP-A-01 132048 (MATSUSHITA ELECTRIC IND CO LTD) 24 May 1989,
- PATENT ABSTRACTS OF JAPAN vol. 017 no. 144 (M-1386) ,23 March 1993 & JP-A-04 318106 (FURUKAWA BATTERY CO LTD:THE) 9 November 1992,

## Description

This invention relates to hydrogen-absorbing electrodes using hydrogen-absorbing alloy, and methods of manufacturing them.

### Background

Nickel-hydride secondary batteries using a hydrogen-absorbing alloy, which can absorb and release hydrogen in a reversible manner, as an anode material have features such as low-pollution and high-energy density making them popular for power sources for portable equipment and electric motors instead of nickel-cadmium secondary batteries; many studies and developments have been made.

In order to make up an electrode using hydrogen-absorbing alloy it is first necessary to grind an alloy ingot into particles and then to form these into the required shape. Current methods practised industrially include
(i) a method wherein alloy particles and a binder are formed into a paste and filled into a current collector; and
(ii) a method wherein such paste is formed into a sheet so as to be press bonded to the current collector. In such electrode making-up processes a firm oxide film is apt to be produced on surfaces of the alloy particles. A hydrogen-absorbing electrode having a surface oxide film offers an initial capacity rather lower than the expected actual capacity, so "activation" is required at the initial stage of charge/discharge. Activation destroys the oxide film, to give an aimed discharge capacity, by carrying out several cycles of charge/discharge at the initial stage of charge/discharge. In a battery, the discharge voltage and a battery capacity therefore lower. Especially in sealed-type batteries, the capacity balance between anode and cathode is lost at the initial stage of charge/discharge, internal pressure rise occurs and cycle life is reduced.

In order to avoid the formation of oxide film electrode making-up under an inert gas atmosphere and oxide film removal steps are proposed. However, these bring problems with complex equipment and troublesome work. In addition, even electrodes prepared by the above proposed methods have problems with formation of oxide film, depending on storage conditions after making-up.

To hasten the above activation, it is known for (1) the hydrogen-absorbing alloy particles or hydrogen-absorbing electrode to be subjected to high-temperature alkaline treatment, and (2) the hydrogen-absorbing alloy particles to be subjected to Ni-nonelectrolytic plating treatment. However insulating needle-like rare earth hydroxide is produced on the alloy surface by the treatment (1) and it is necessary to carry out ultra-sonic cleaning to remove this. Further, considerable rinsing is required to remove alkali completely so the method is troublesome. The needle-like rare earth hydroxide would cause a decrease in conductivity and shortening of battery life. In treatment (2) it is difficult to maintain constant plating conditions and handling is troublesome because the alloy after undergoing the treatment is inflammable. Furthermore the alloy is not continuous with the plated layer in grain structure so that, as the cycle goes on, insulating needle-like rare earth hydroxide precipitates at the interface to cause peeling-off of the plated layer.

It is known that nickel-hydride secondary batteries tend to suffer from a rise of internal pressure at the last stage of charging, with potential breakage of the container and scattering of electrolyte. The rise of internal pressure is said to be caused by hydrogen gas produced at the anode during charging. To prevent this it is known to form a Ni-plated layer previously on the hydrogen-absorbing alloy so as to enhance its hydrogen-absorbing activity. However, this method has poor productivity because of the extra plating step, as well as problems similar to those of the above treatment(2).

It is known from JP-A-5/225975 to treat hydrogen-absorbing alloy particles with hydrochloric acid, e.g. 0.5N Hcl, thereby removing oxide film and improving initial activation.

JP-A-3/093160 describes another technique for removing oxide film in which the hydrogen-absorbing alloy is treated with a reducing agent such as carbon disulphide, formic acid or carbon monoxide.

It would be desirable to provide a hydrogen-absorbing electrode which does not require activation and the conductivity of which does not worsen even when used in alkaline electrolyte. It would also be desirable to provide a method for manufacturing such a hydrogen-absorbing electrode by a simple process.

In a first aspect this invention provides a hydrogen-absorbing electrode comprising a hydrogen-absorbing alloy including
(a) a mixture of rare earth elements;
(b) aluminium, and
(c) a transition metal component, being one or more selected from the transition metals of Groups VIIa, VIII and Ib,
characterised by an enriched surface layer between 50 and 300 nm thick which contains a higher percentage of the transition metal component than does the bulk of the alloy.

Since the rare earth element which tends to form oxide surface film is removed or reduced, with the enriched layer formed on the electrode as described, activation becomes unnecessary. Accordingly, a battery using a hydrogen electrode having the above structure can have a high discharge voltage and battery capacity. Especially in a sealed-type battery the capacity balance between anode and cathode at the initial stage of charge/discharge can be maintained and internal pressure rise does not occur so that service life is prolonged. In addition, electrode reaction is promoted with a good efficiency from the first cycle because the enriched layer itself functions as a charge transfer reaction field. Since the enriched layer is formed essentially by surface elution of rare earth, needle-like rare earth hydroxide does not tend to form on the alloy surface so that reduction in conductivity is controlled, even when the electrode is used as the anode in the alkaline electrolyte. Also the battery can have a high capacity and long service life.

The hydrogen-absorbing alloy has an Mm (misch metal), Al and transition metals as its components. Mm is a composite of rare earth elements. La, Ce, Pr and Nd etc. may be mentioned as rare earth elements. Elements belonging to VIIa-group, VIII-group and Ib-group in periodic table provide the transition metals, for example, Ni, Co, Mn, Fe and Cu.

The transition metal component may be mainly composed of Ni.

A surface part of the enriched layer may consist of a Ni layer. With this feature the hydrogen-absorbing activity is increased so as to improve gas absorbing ability.

The thickness of the enriched layer ranges from 50 to 300 nm. When the thickness is less than 50 nm, the layer does not exert its function fully so that activation becomes necessary. when the thickness is larger than 300 nm the enriched layer tends to peel off so that it does not work, and rare earth hydroxide is produced on the alloy surface so that conductivity is worsened and battery life shortened.

A second aspect of the invention is a method of making a hydrogen-absorbing electrode comprising hydrogen-absorbing alloy including
(a) a mixture of rare earth elements;
(b) aluminium, and
(c) a transition metal component, being one or more selected from the transition metals of Groups VIIa, VIII and Ib,
characterised by an acid treatment in which particles of the alloy are:
dipped in an aqueous acetic acid/acetate buffer having a pH in the range from 2 to 6 for a time sufficient to form thereon an enriched surface layer between 50 and 300nm thick containing a higher percentage of the transition metal component than does the bulk of the alloy, and
rinsed and dried.

When the particles of hydrogen-absorbing alloy are dipped in the aqueous buffer at pH from 2 to 6 oxide film formed on the alloy surface is removed and Al and rare earth elements are eluted from the alloy surface, so that the surface of the alloy has an enriched layer having a larger percentage of transition metal than before. If a solution of acidity stronger than pH2 were used, even Ni (preferably forming a major component of the alloy) would be corroded, reducing the mass of the alloy and damaging the electrode properties. Furthermore, with acidity stronger than pH2 thickness of the enriched layer becomes hard to control and a thick layer is formed which would tend to peel off as the cycle progresses. Were the solution to have an acidity weaker than pH6, the removal of oxide film and the elution of Al and rare earth elements scarcely occur and the enriched layer is hard to form. since Al corrosive region is included in the range pH2 to pH6, Al is ready to be eluted and the enriched layer is apt to be formed in that range. Aqueous solution having an acidity of pH2 to pH6 is easily rinsed as compared with alkali so rinsing work is short, simplifying the treatment.

In the manufacturing method following conditions may be used.

The temperature of the aqueous buffer may be set in the range 20°C to 90°C. Its reactivity is improved by the higher temperature, and the enriched layer is apt to be formed more quickly.

Especially in the range 80°C to 90°C, Ni as a component of the hydrogen-absorbing alloy elutes to some extent, and precipitates on the surface of the enriched layer as a Ni layer. since this Ni layer can be obtained without a plating process, productivity can be improved as compared with the known method in which a Ni layer is formed by plating. When the temperature is lower than 80°C, such a Ni layer is not produced because Ni is scarcely eluted.

Because the aqueous solution is acetic acid/acetate buffer, its pH is easily set to in the range 2 to 6 and fluctuation of the pH is small.

As an optional preliminary stage of the acid treatment process, a hydrogen-absorbing alloy ingot may be roughly ground, classified, further finely ground and again classified to prepare particles of the hydrogen-absorbing alloy. The alloy surface area is increased by grinding the alloy to fine particles. The removal of oxide film and the elution of Al and rare earth elements then proceed with good efficiency in the acid treatment process so that the enriched layer forms readily.

In particular when the hydrogen-absorbing alloy particles prepared by finely grinding and classifying lie within a grain size range of 45 to 75 µm, the enriched layer is apt to be produced more easily.

### Brief Description of the Drawings

Fig. 1 is a partial sectional view of a hydrogen-absorbing alloy after undergoing acid treatment (Example 1).

Fig. 2 shows composition at the alloy interior and surface.

Fig. 3 shows pore diameter distribution of the treated alloy.

Fig. 4 shows cycle test results for batteries using electrodes of Example 1 and Comparison Example 1.

Fig. 5 shows a discharge curve of the electrode of Example 1.

Fig. 6 shows a discharge curve of the electrode of Comparison Example 1.

Fig. 7 shows cycle test results for the electrodes of Example 1 and Comparison Example 1.

Fig. 8 shows changes of initial discharge capacity for the electrodes of Example 1, Comparison Example 1 and Comparison Example 2.

Fig. 9 shows X-ray diffraction peaks before charge/discharge of the electrode of Comparison Example 3.

Fig. 10 shows X-ray diffraction peaks after charge/discharge of the electrode of Example 1.

Fig. 11 shows corresponding X-ray diffraction peaks for Comparison Example 3.

Fig. 12 is a partial sectional view of the alloy surface of the electrode of Comparison Example 3 after charge/discharge.

Figs. 13 and 14 show cycle test results for the electrodes of Examples 2 and 3.

Figs. 15 and 16 compare X-ray diffraction peaks of alloy treated at 80°C to 90°C (Example 3) with that of Comparison Example 1.

Fig. 17 compares internal gas generation for the electrodes of Example 3 and Comparison Example 1.

Fig. 18 shows cycle test results for Example 4 and Comparison Example 4.

Fig. 19 shows cycle test results for batteries using electrodes of Example 5 and Comparison Example 5.

### Example 1

A hydrogen-absorbing alloy ingot having a composition of MmNi_{3.8}Al_{0.3}Co_{0.7}Mn_{0.2} was made up and ground by machine to prepare alloy particles having appropriate sizes (grain size of 75 µm or smaller). Mm represents a misch metal: a composite comprising rare earth elements of one or more kinds of La, Ce, Pr and Nd.

The alloy particles were dipped in acetic acid/sodium acetate buffer solution adjusted to 60°C and pH3.6, stirred, rinsed and dried. In other words, the alloy particles were subjected to an acid treatment. Since the acetic acid/sodium acetate buffer solution was used, the pH was easily set and its fluctuation was small.

The prepared alloy particles were mixed with a binder to form a paste, filled into a nickel fibre substrate, dried and pressed to form a hydrogen-absorbing electrode.

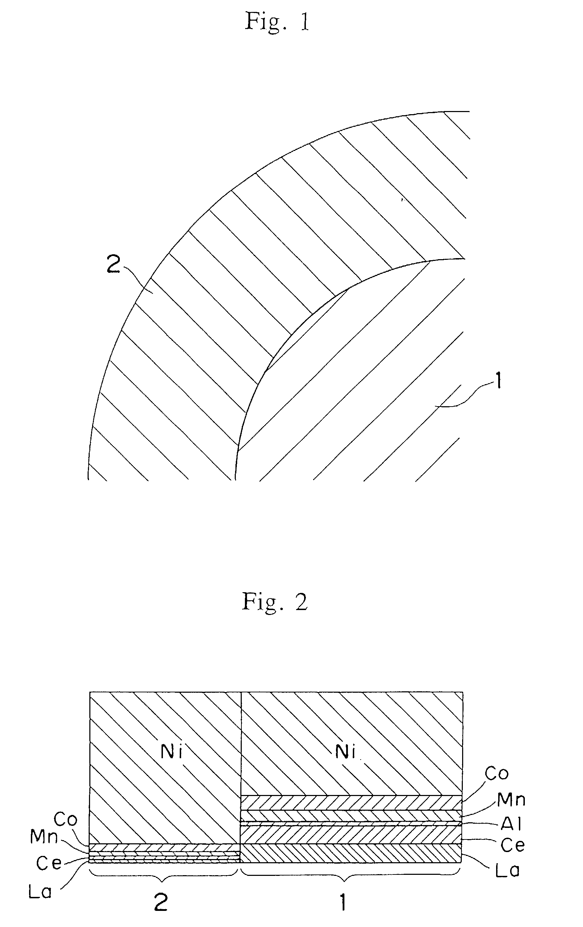

After the acid treatment the alloy particles were subjected to surface analysis by X-ray photoelectron spectroscopy (XPS), high-magnification surface observation by transmission-type electron microscope (TEM), element analysis and electron beam diffraction. It was found that the alloy particles had a sectional structure as shown in Fig. 1. Namely, an enriched layer 2 was produced at the surface of a bulk portion 1 by the acid treatment. Fig. 2 shows an alloy composition for these parts. The bulk 1 has a composition MmNi_{3.8}Al_{0.3}Co_{0.7}Mn_{0.2} which is the original composition. The enriched layer 2 has a thickness of 50 to 300nm (controlled by the dipping time of the acid treatment) and, as seen in Fig. 2, a larger inclusion percentage of transition metals such as Ni, Co and Mn as compared with the bulk 1, mainly because of elution of Al and the rare earth elements in Mm.

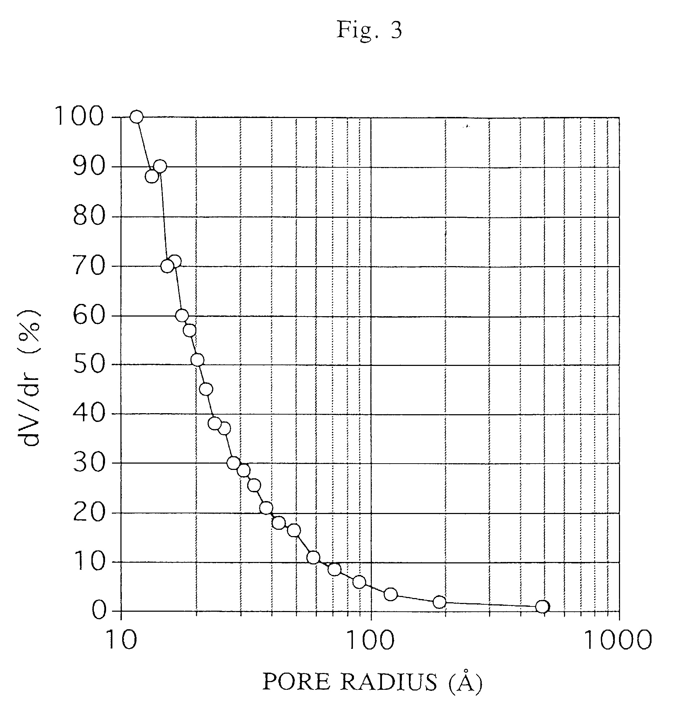

Pore diameter distribution was measured on the treated alloy particles. Fig. 3 shows results measured from an absorption side. The surface of the alloy particles had a structure mainly including fine pores having diameters of several tens of Ångstroms (i.e. several nanometres) . The surface area was calculated as about 400 m²/g from specific surface area measurement results; this value is fairly large. The alloy particles visually presented a black colour due to irregular reflection.

### Comparison Example 1

A hydrogen-absorbing electrode was made up in the same way as in Example 1 except that the acid treatment was omitted.

### Comparison Example 2

A hydrogen-absorbing electrode was made up in the same way as in Example 1 except that an alkali treatment with aqueous alkali was done in place of the acid treatment.

### Comparison Example 3

The dipping time in the acid treatment of Example 1 was prolonged to form a rich layer thicker than 300 µm. Other conditions were identical with those of Example 1.

### TEST I

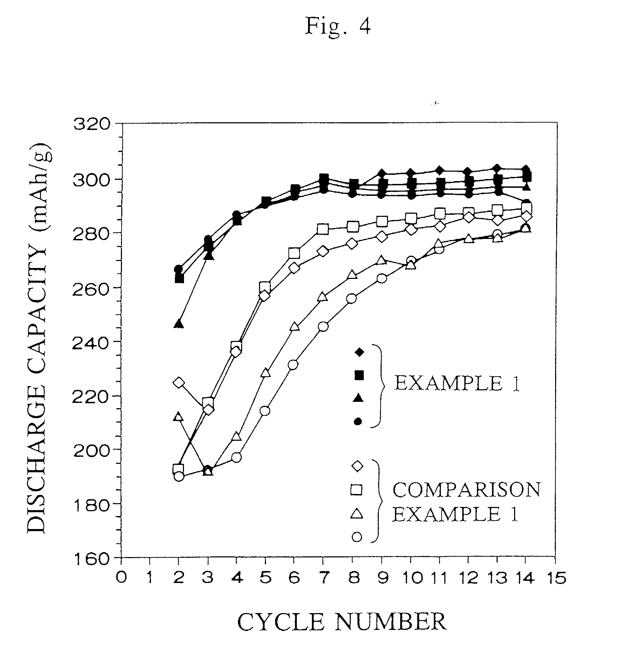

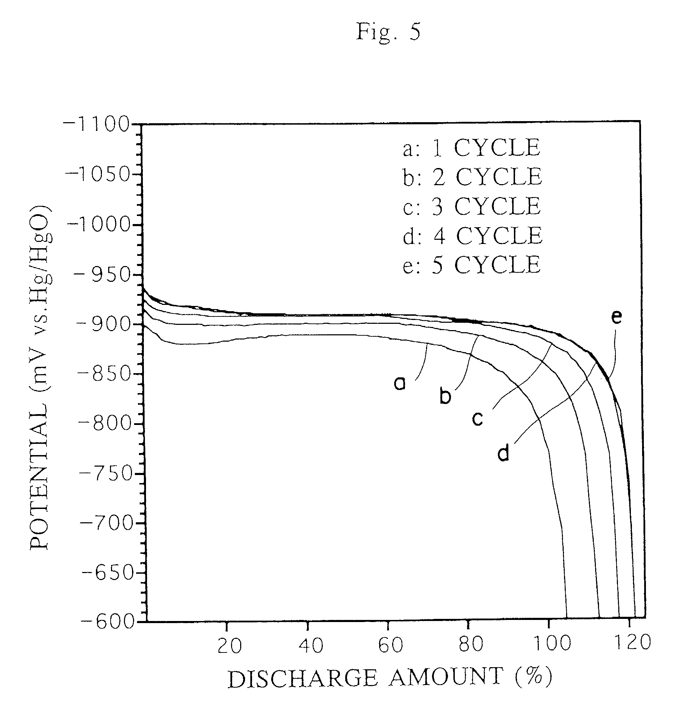

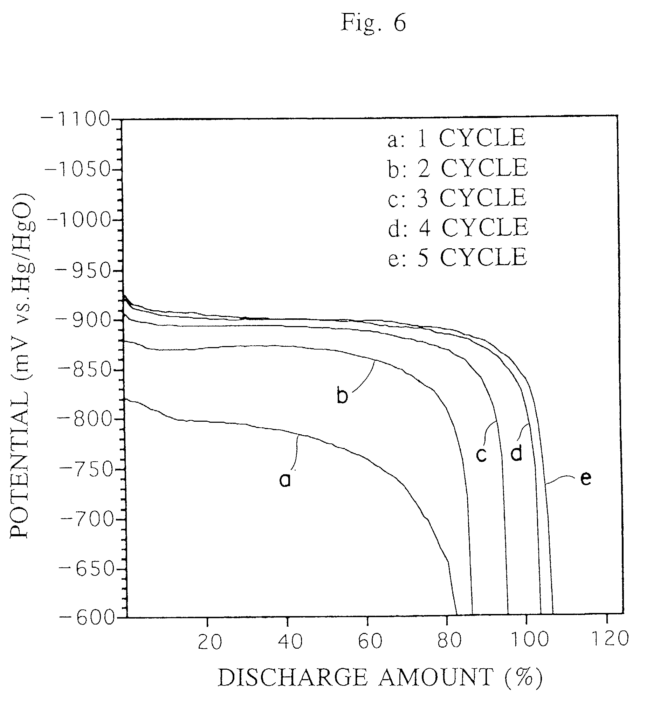

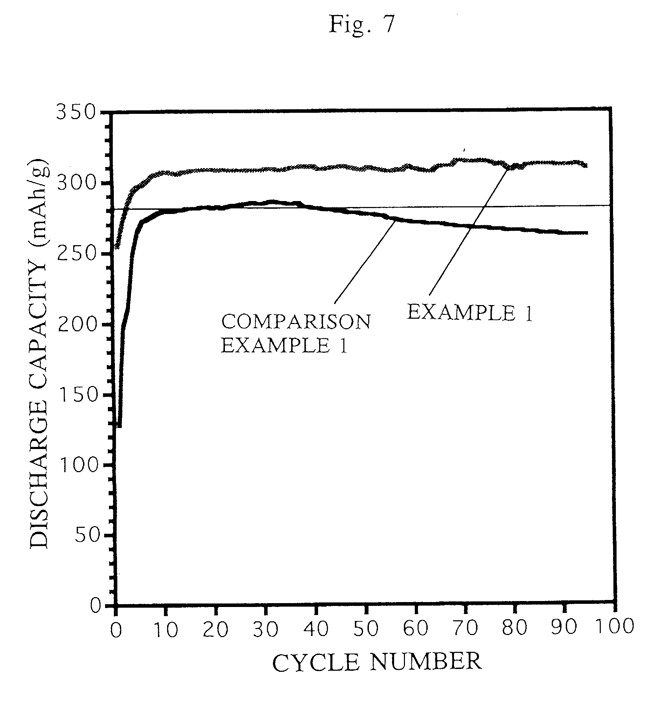

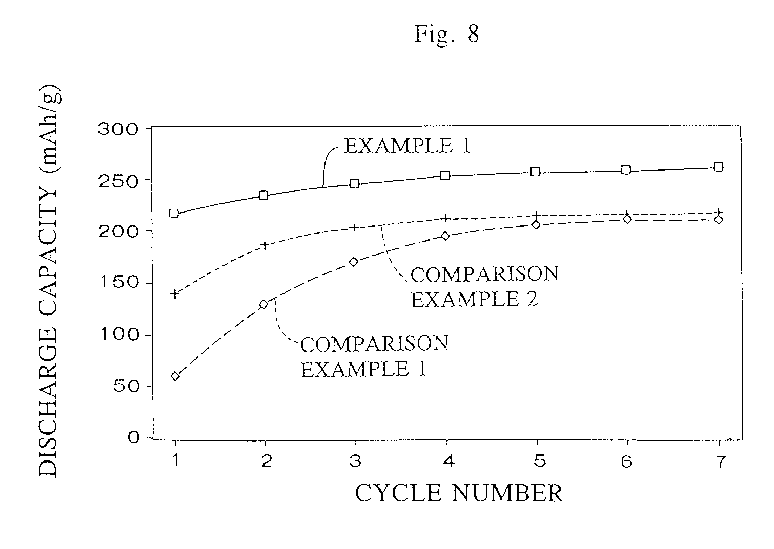

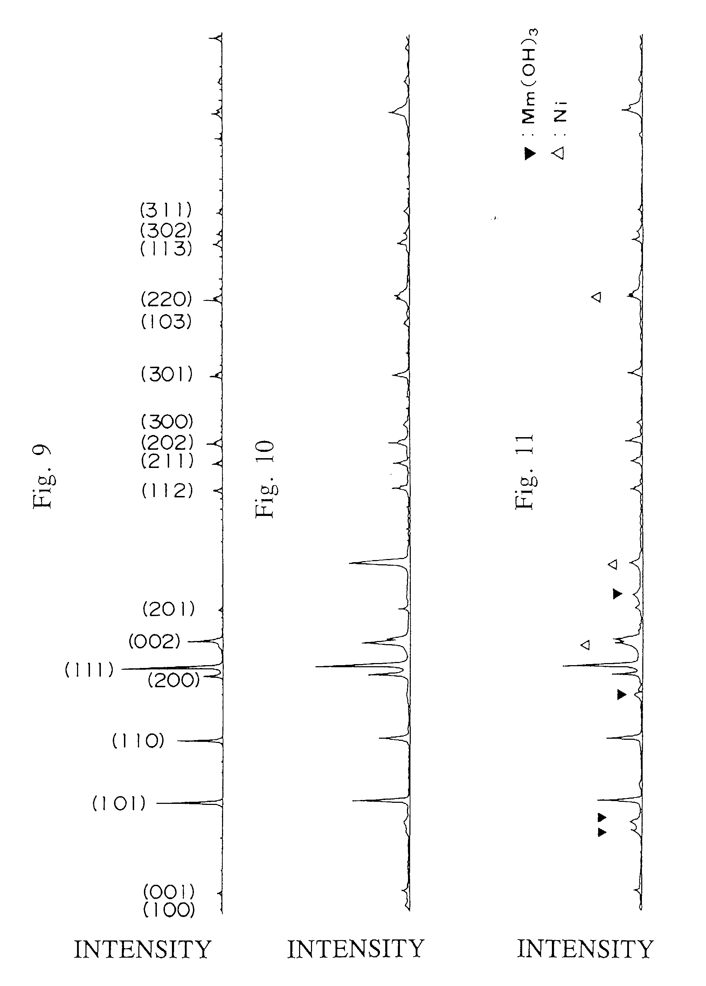

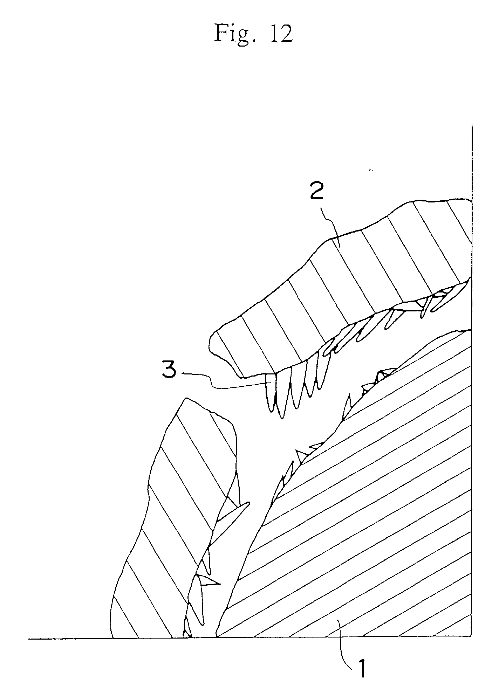

(1) Using the hydrogen-absorbing electrode of example 1 with an ordinary nickel electrode as counter electrode, four open-type nickel-hydride secondary battery cells were made up. Using the electrode of Comparison Example 1 four battery cells were made up in the same way. Cycle tests were done under conditions of charge of 0.1C x 150% and discharge of 0.2C (cut potential -600mV vs. Hg/HgO). Fig. 4 shows the results.
   Activation velocities and discharge capacities are scattered in the comparison cells, whereas with the electrodes of Example 1 the activation velocities are approximately the same and large, and the discharge capacities are large too.
(2) For the electrodes of Example 1 and Comparison Example 1 discharge curves of first through fifth cycles were plotted. The discharge potential stands noble from the first cycle and becomes higher as cycling goes on in the electrode of Comparison Example 1 (Fig. 6), but stands more basic from the first time in the electrode of Example 1 (Fig. 5).
(3) Cycle tests were done on the electrodes of Example 1 and Comparison Example 1. Fig. 7 shows that the electrode of Example 1 is more excellent in cycle characteristics.
(4) Changes of initial discharge capacities were measured on the electrodes of Example 1, Comparison Example 1 and Comparison Example 2. Fig. 8 shows that initial activation of the electrode of Comparison Example 2 is quicker than that of Comparison Example 1, but that Example 1 is still quicker and its capacity is large too.
(5) X-ray diffractions were measured for the electrodes of Example 1 and Comparison Example 3. Fig. 9 shows X-ray diffraction peaks of the electrode of Comparison Example 3 before charge/discharge, Fig. 10 is for that of Example 1 after charge/discharge and Fig. 11 is for Comparison Example 3 after charge/discharge. Fig. 11 indicates peaks for Mm(OH)₃ (rare earth hydroxide) after charge/discharge for Comparison Example 3. Observation by electron microscope of the electrode alloy surface after charge/discharge showed that the enriched layer 2 had peeled off from the bulk 1 and there was rare earth hydroxide 3 between them as shown in Fig. 12. In other words, the enriched layer 2 when thicker than 300 nm peels off and rare earth hydroxide 3 is produced. The peeled enriched layer 2 does not exert its function. When rare earth hydroxide 3 is produced, conductivity is worse and battery service life shortened. When the enriched layer 2 is thinner than 50 nm it does not exert its function.

### Example 2

Hydrogen-absorbing electrodes were made up in the same way as in Example 1 except that the pH in the acid treatment was set to six different values; 2.09, 2.71, 3.59, 4.00, 4.71 and 5.96.

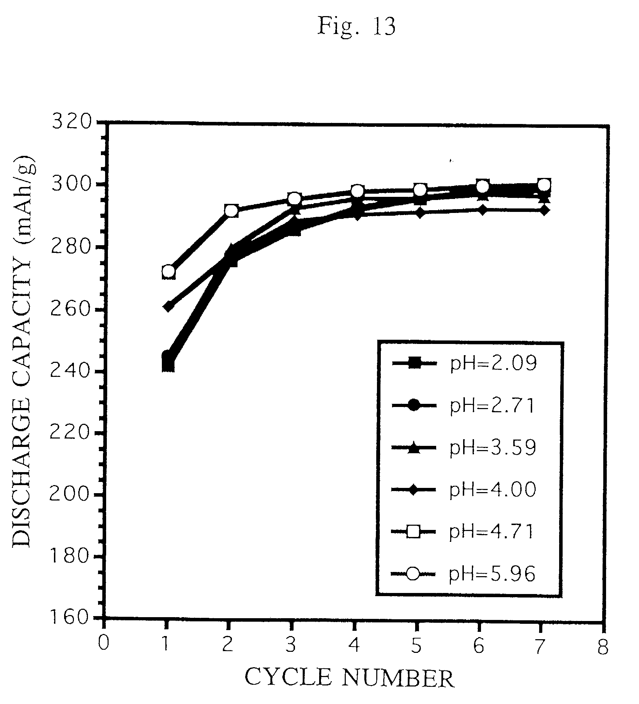

The prepared electrodes were subjected to cycle tests, and all presented initial characteristics the same as those of Example 1, as illustrated in Fig. 13. So, an enriched layer 2 similar to that of Example 1 is produced if the pH value lies within a range from 2 to 6.

### Example 3

Hydrogen-absorbing electrodes were made up in the same way as in Example 1 except that the temperature in the acid treatment was set to four different values; 20°C, 40°C, 60°C, and 80 to 90°C.

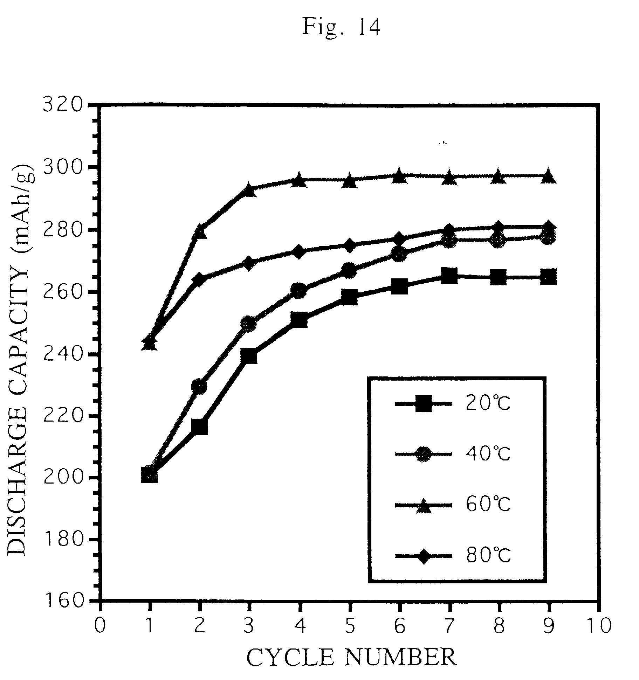

The prepared electrodes were subjected to cycle tests. The higher the temperature, the larger the initial discharge capacity as illustrated in Fig. 14. However even the 20°C treatment led to an initial capacity higher than those in Comparison Example 1 and Comparison Example 2 (Fig. 8) so that it was very satisfactory. It can be understood that an enriched layer 2 like that of Example 1 is produced if the temperature lies within a range from 20°C to 90°C.

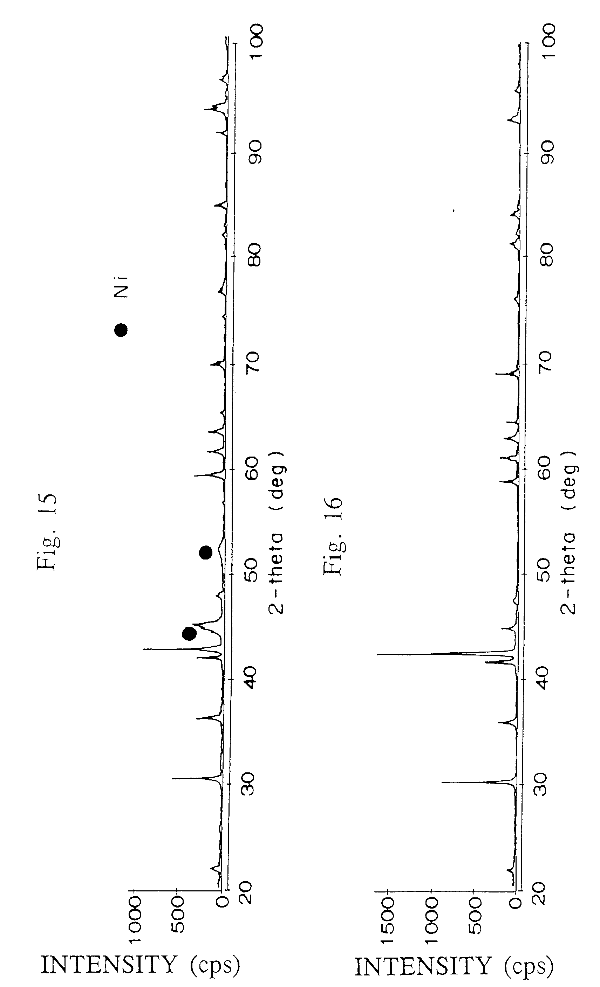

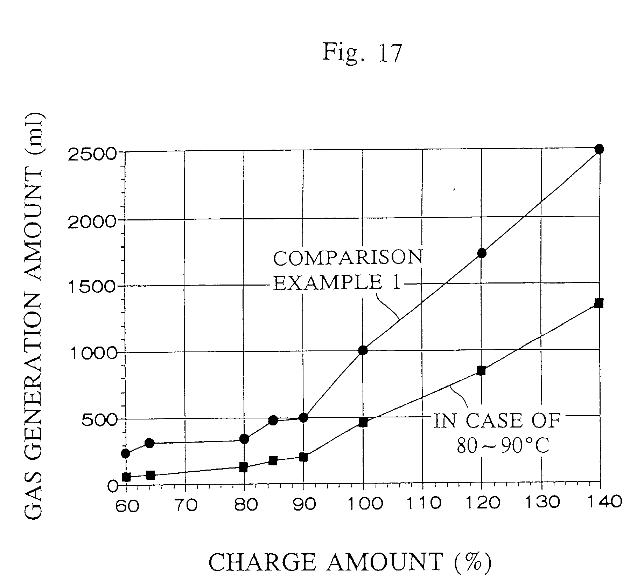

X-ray diffractions were measured on the alloy which had the acid treatment at 80 to 90°C (Fig. 15) and the alloy of Comparison Example 1 (Fig. 16). Fig. 15 shows Ni peaks. So, the enriched layer is produced on the alloy surface and a nickel layer is produced on the surface of the enriched layer. Fig. 17 shows gas generation amounts at the end of initial discharge for electrodes of the same two alloys, and shows that a battery using the electrode with 80 to 90°C treated alloy has lower internal pressure increase than the electrode of Comparison Example 1. So, by setting the temperature condition of acid treatment in the range 80 to 90°C, activation becomes unnecessary because the enriched layer is produced and gas absorbing ability is improved because of the Ni layer produced on the surface of the enriched layer.

### Example 4

A hydrogen-absorbing electrode was made up in the same way as in Example 1 except that a hydrogen-absorbing alloy of composition MmNi_{3.8}Al_{0.5}Co_{0.7} was used.

### Comparison Example 4

A hydrogen-absorbing electrode was made up in the same way as in Example 4 except that the acid treatment was omitted.

### TEST II

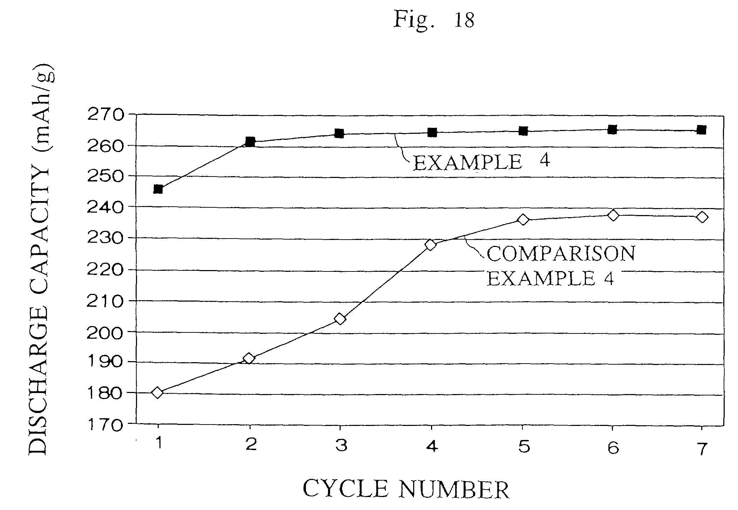

Cycle tests were done on the electrodes of Example 4 and Comparison Example 4. Fig. 18 shows these results: the electrode of Example 4 presents an excellent cycle characteristic compared with that of Comparison Example 4.

### Example 5

A hydrogen-absorbing alloy having the composition of MmNi_{3.8}Al_{0.3}Co_{0.7}Mn_{0.2} was weighed, thrown in a crucible, and molten by a high-frequency melting furnace under an atmosphere of inert gas to make an ingot. this was rough ground mechanically and classified to select particles within a grain size range 75 to 150 µm, using a screen. The classified particles were further rough ground mechanically and classified to select particles within a grain size range 45 to 75 µm, using a screen; these alloy particles were then ready.

The alloy particles were dipped in acetic acid/sodium acetate buffer solution adjusted to 60°C and pH 3.6, stirred and rinsed and then dried, i.e. subjected to acid treatment.

The treated particles were mixed with binder to form a paste, filled into a nickel-fibre substrate, dried and pressed to form a hydrogen-absorbing electrode.

The acid-treated alloy particles were subjected to surface analysis by X-ray photoelectron spectroscopy (XPS), high-magnification surface observation by transmission-type electron microscope (TEM), element analysis and electron beam diffraction, and found to have a sectional structure similar to those of Example 1. Namely, an enriched layer 2, having a larger percentage of transition metal (such as Ni, Co & Mn) than the bulk 1, was produced on the surface of the bulk 1.

### Comparison Example 5

An electrode was made up in the same way as in Example 5 except that the acid treatment was omitted.

### TEST III

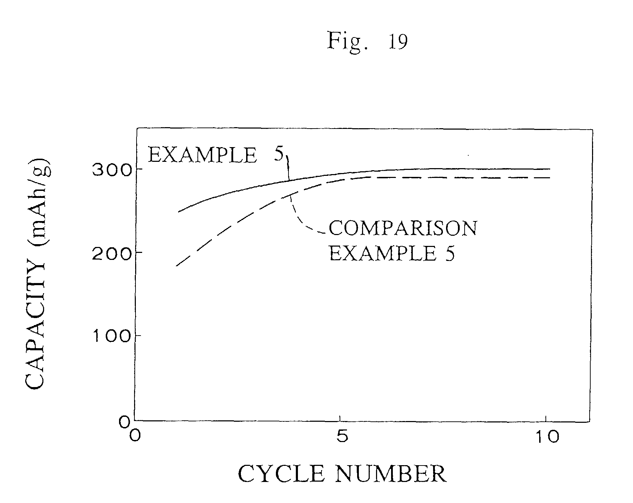

Using the hydrogen-absorbing electrode of Example 5 with a well-known sintered-type nickel-hydroxide electrode as counter-electrode, potassium-hydroxide aqueous solution having a specific weight of 1.28 was filled to excess therein as electrolyte and left for a specified time, so that an open-type nickel-hydride secondary battery with excessive cathode capacity was made up. A similar battery was made with the hydrogen-absorbing electrode of Comparison Example 5. Cycle tests were done on the two batteries. Test conditions were such that 150% of expected hydrogen-absorbing electrode capacity was charged at a temperature of 20°C and with a current of 0.1C of battery capacity, and discharge was done until the hydrogen-absorbing electrode got to -0.6V on the basis of mercury oxide reference electrode at a current of 0.2C. Fig. 19 shows that activation of the electrode of Example 5 is quicker than that of Comparison Example 5. In addition, the battery using the electrode of Example 5 attained a capacity as large as 300 mAh/g while that of Comparison Example 5 attained only 290 mAh/g.

Activations of both the electrodes were done comparatively quickly up to the high capacities. The reason is supposed to be that alloy surface area increases for finely ground particles, easing effective removal of oxide film and elution of Al and rare earth elements in the acid treatment process, so that the enriched layer is easily produced. Especially when the hydrogen-absorbing alloy particles are prepared by being ground and classified within a grain size range of 45 to 75 µm, it appears that the enriched layer is particularly easily produced.

## Claims

1. A hydrogen-absorbing electrode comprising a hydrogen-absorbing alloy including
(a) a mixture of rare earth elements;
(b) aluminium, and
(c) a transition metal component, being one or more selected from the transition metals of Groups VIIa, VIII and Ib,
characterised by an enriched surface layer between 50 and 300 nm thick which contains a higher percentage of the transition metal component than does the bulk of the alloy.

2. An electrode according to claim 1 in which the transition metal component is one or more selected from Ni, Co, Mn, Fe and Cu.

3. An electrode according to claim 1 or claim 2 in which the transition metal component consists mainly of Ni.

4. An electrode according to any one of the preceding claims in which the hydrogen-absorbing alloy has a nickel layer at the surface of the enriched surface layer.

5. A method of making a hydrogen-absorbing electrode comprising hydrogen-absorbing alloy including
(a) a mixture of rare earth elements;
(b) aluminium, and
(c) a transition metal component, being one or more selected from the transition metals of Groups VIIa, VIII and Ib,
characterised by an acid treatment in which particles of the alloy are:
dipped in an aqueous acetic acid/acetate buffer having a pH in the range from 2 to 6 for a time sufficient to form thereon an enriched surface layer between 50 and 300nm thick containing a higher percentage of the transition metal component than does the bulk of the alloy, and
rinsed and dried.

6. A method according to claim 5 in which the aqueous buffer is at a temperature in the range 20°C to 90°C for the acid treatment.

7. A method according to claim 6 in which said temperature is in the range from 80°C to 90°C.

8. A method according to any one of claims 5 to 7, in which as a preliminary step an ingot of hydrogen-absorbing alloy is roughly ground, size-classified, and particles of the selected size further ground and classified again to a finer size to prepare particles of the hydrogen-absorbing alloy for the acid treatment.

9. A method according to claim 8 in which said finer size lies within a grain size range from 45 to 75 µm.

## Patentansprüche

1. Wasserstoffabsorbierende Elektrode, die eine wasserstoffabsorbierende Legierung umfaßt, die
(a) ein Gemisch von Seltenerdelementen,
(b) Aluminium und
(c) eine Übergangsmetallkomponente, bei der es sich um ein oder mehrere Metalle handelt, die aus den Übergangsmetallen von Gruppe VIIa, VIII und IB ausgewählt sind,
enthält, gekennzeichnet durch eine angereicherte Oberflächenschicht mit einer Dicke zwischen 50 und 300 nm, die einen höheren Prozentanteil der Übergangsmetallkomponente enthält als die Hauptmasse der Legierung.

2. Elektrode gemäß Anspruch 1, wobei es sich bei der Übergangsmetallkomponente um ein oder mehrere Metalle handelt, die aus Ni, Co, Mn, Fe und Cu ausgewählt sind.

3. Elektrode gemäß Anspruch 1 oder 2, wobei die Übergangsmetallkomponente hauptsächlich aus Ni besteht.

4. Elektrode gemäß einem der vorstehenden Ansprüche, wobei die wasserstoffabsorbierende Legierung an der Oberfläche der angereicherten Oberflächenschicht eine Nickelschicht aufweist.

5. Verfahren zur Herstellung einer wasserstoffabsorbierenden Elektrode, die eine wasserstoffabsorbierende Legierung umfaßt, die
(a) ein Gemisch von Seltenerdelementen,
(b) Aluminium und
(c) eine Übergangsmetallkomponente, bei der es sich um ein oder mehrere Metalle handelt, die aus den Übergangsmetallen von Gruppe VIIa, VIII und IB ausgewählt sind,
enthält, gekennzeichnet durch eine Säurebehandlung, bei der man Teilchen der Legierung
ausreichend lange in einen wäßrigen Essigsäure/Acetat-Puffer mit einem pH-Wert im Bereich von 2 bis 6 eintaucht, daß sich darauf eine angereicherte Oberflächenschicht mit einer Dicke zwischen 50 und 300 nm bildet, die einen höheren Prozentanteil der Übergangsmetallkomponente enthält als die Hauptmasse der Legierung, und
abspült und trocknet.

6. Verfahren gemäß Anspruch 5, wobei der wäßrige Puffer für die Säurebehandlung eine Temperatur im Bereich von 20°C bis 90°C hat.

7. Verfahren gemäß Anspruch 6, wobei die Temperatur im Bereich von 80°C bis 90°C liegt.

8. Verfahren gemäß einem der Ansprüche 5 bis 7, wobei als vorbereitender Schritt ein Gußblock der wasserstoffabsorbierenden Legierung grob gemahlen wird, die Teilchen nach der Größe klassiert und die Teilchen der gewählten Größe weiter gemahlen und wiederum auf eine feinere Größe klassiert werden, um Teilchen der wasserstoffabsorbierenden Legierung für die Säurebehandlung herzustellen.

9. Verfahren gemäß Anspruch 8, wobei die feinere Größe innerhalb eines Korngrößenbereichs von 45 bis 75 µm liegt.

## Revendications

1. Électrode absorbant l'hydrogène comprenant un alliage absorbant l'hydrogène incluant
(a) un mélange d'éléments des terres rares ;
(b) de l'aluminium, et
(c) un composant métal de transition, consistant en un ou plusieurs des métaux de transition des Groupes VIIa, VIII et Ib,
caractérisée par une couche superficielle enrichie de 50 à 300 nm d'épaisseur qui contient un plus fort pourcentage du composant métal de transition que la masse de l'alliage.

2. Électrode selon la revendication 1, dans laquelle le composant métal de transition consiste en un ou plusieurs éléments choisis parmi Ni, Co, Mn, Fe et Cu.

3. Électrode selon la revendication 1 ou la revendication 2, dans laquelle le composant métal de transition consiste principalement en Ni.

4. Électrode selon l'une quelconque des revendications précédentes, dans laquelle l'alliage absorbant l'hydrogène comporte une couche de nickel à la surface de la couche superficielle enrichie.

5. Procédé de fabrication d'une électrode absorbant l'hydrogène, comprenant un alliage absorbant l'hydrogène incluant
(a) un mélange d'éléments des terres rares ;
(b) de l'aluminium, et
(c) un composant métal de transition, consistant en un ou plusieurs des métaux de transition des Groupes VIIa, VIII et Ib,
caractérisé par un traitement acide dans lequel des particules de l'alliage sont :
plongées dans un tampon aqueux acide acétique/acétate ayant un pH situé dans l'intervalle de 2 à 6 pendant un temps suffisant pour y former une couche superficielle enrichie de 50 à 300 nm d'épaisseur contenant un plus fort pourcentage du composant métal de transition que la masse de l'alliage, et
rincées et séchées.

6. Procédé selon la revendication 5, dans lequel le tampon aqueux est à une température située dans l'intervalle de 20°C à 90°C pendant le traitement acide.

7. Procédé selon la revendication 6, dans lequel ladite température se situe dans l'intervalle de 80°C à 90°C.

8. Procédé selon l'une quelconque des revendications 5 à 7, dans lequel, à titre d'étape préliminaire, un lingot d'alliage absorbant l'hydrogène est broyé grossièrement, classé par tailles et les particules de la taille choisie sont davantage broyées et classées de nouveau à une taille plus petite pour préparer les particules de l'alliage absorbant l'hydrogène pour le traitement acide.

9. Procédé selon la revendication 8, dans lequel la taille plus petite se situe dans un intervalle granulométrique de 45 à 75 µm.
